# EUROPÄISCHE PATENTANMELDUNG

(11) **EP 1 897 629 A2**
(43) Veröffentlichungstag der Anmeldung: **12.03.2008**
(21) Anmeldenummer: 07114604.7
(22) Anmeldetag: 20.08.2007
(51) Int. Cl.: B09B 1/00

(54) **Verfahren zum Anordnen einer mineralischen Dichtung auf einer Deponie und Verfahren zum Einbau einer Kombinationsabdichtung zur Abdichtung einer Deponie**

(30) Priorität: 07.09.2006 DE 102006042481
(71) Anmelder: Hermann Kirchner Bauunternehmung GmbH, 36251 Bad Hersfeld (DE); Kirchhoff Leipzig Stassenbau GmbH & Co. KG, 04420 Grosslehna (DE)
(72) Erfinder: Bahl, Mike, 04207 Leipzig (DE); Locker, Jens, 36275 Kirchheim (DE)
(74) Vertreter: Liedtke, Markus

(57) **Zusammenfassung**

Die Erfindung betrifft ein Verfahren zum Anordnen einer mineralischen Dichtung auf einer Deponie, insbesondere zum Einbau einer Kombinationsabdichtung, die neben der mineralischen Dichtung eine Kunststoffdichtungsbahn umfasst, welches die folgenden Verfahrensschritte umfasst:
- Herstellen eines rieselfähigen Mischguts (1) für die mineralische Dichtung vor Ort,
- Transport des Mischguts (1) für die mineralische Dichtung zur abzudichtenden Deponie,
- Einbau des rieselfähigen Mischguts (1) in Bahnen (B.1 bis B.n) definierter Breite, wobei vor Einbau des Mischgutes (1) in eine Bahn (B.1 bis B.n) an beiden seitlichen Rändern der Bahn (B. bis B.n) parallele Lehren (2) temporär angeordnet werden,
- bahnenweises Abziehen des Mischgutes (1) auf eine definierte Dicke mittels einer Abziehvorrichtung (5), die auf den Lehren (2) geführt wird,
- bahnenweise Verdichtung des abgezogenen Mischgutes (1) mittels einer Verdichtungseinrichtung (6),
- feldweise Anordnung einer Schutzlage (4) auf der zuletzt verdichteten Bahn (B.1 bis B.n) unmittelbar nach der Verdichtung,

wobei beim Herstellen des rieselfähigen Mischguts (1) ein Wassergehalt zwischen 7,5% und 8% eingestellt wird.

## Beschreibung

Die Erfindung betrifft ein Verfahren zum Anordnen einer mineralischen Dichtung auf einer Deponie und ein Verfahren zum Einbau einer Kombinationsabdichtung zur Abdichtung einer Deponie.

Im Stand der Technik sind verschiedene Verfahren zum Anordnen einer mineralischen Dichtung auf einer Deponie bekannt. Üblicherweise wird zur Herstellung derartiger mineralischer Dichtungen Ton verwendet, der flächig auf Deponien aufgetragen und anschließend verteilt und flächig verdichtet wird. Dabei werden diverse Verdichtungseinrichtungen verwendet. Nachteilig ist dabei, dass verschiedene Bereiche der mineralischen Dichtung unterschiedlich oft mit den Verdichtungsgeräten verdichtet werden, so dass sich unterschiedliche Verdichtungsgrade in der mineralischen Dichtung einstellen. Zudem ist auf eine Deponie aufgetragener Ton schlecht verdichtbar, da Müll, der den Untergrund unter der mineralischen Dichtung bildet, sehr weich und nachgiebig ist. Außerdem ist Ton bei Regen nicht verarbeitbar und insbesondere in solchen Regionen teuer, in denen er nicht natürlich vorkommt.

Des Weiteren ist es im Stand der Technik bekannt, Gemenge als mineralische Dichtung einzubauen, die bindige Materialien, Sand Wasser und gegebenenfalls Zusätze enthalten. Auch diese Gemenge werden flächig eingebaut und anschließend verdichtet, wobei sich die vorgenannten Nachteile infolge ungleicher Verdichtungszyklen ebenfalls nicht vermeiden lassen.

Die bekannten Verfahren, bei denen Gemenge zunächst hergestellt werden, erfordern üblicherweise einen Antransport des Gemenges von speziellen Mischanlagen zur Deponie; regelmäßig verstreichen dabei große Zeitspannen, so dass derartige Gemenge unkontrolliert austrocknen, insbesondere in den oberflächennahen Bereichen. Daraus ergibt sich eine inhomogene Beschaffenheit des einzubauenden Gemenges bereits zu Beginn des Einbauprozesses. In Verbindung mit den herkömmlichen Methoden des Einbaus und der Verdichtung führt dies zu Dichtungsebenen, die keine rissfreien Oberflächen aufweisen.

Der Erfindung liegt die Aufgabe zu Grunde, eine verbessertes Verfahren zum Anordnen einer mineralischen Dichtung auf einer Deponie und ein verbessertes Verfahren zum Einbau einer Kombinationsabdichtung zur Abdichtung einer Deponie anzugeben, die insbesondere eine höhere Prozesssicherheit beim Einbau der Dichtungen ermöglichen.

Die Aufgabe wird erfindungsgemäß gelöst durch Verfahren, welche die in Anspruch 1 oder Anspruch 2 angegebenen Merkmale aufweisen.

Vorteilhafte Ausgestaltungen der Erfindung sind Gegenstand der Unteransprüche.

Das erfindungsgemäße Verfahren zum Anordnen einer mineralischen Dichtung auf einer Deponie wird insbesondere zum Einbau einer Kombinationsabdichtung angewendet, die neben der mineralischen Dichtung eine Kunststoffdichtungsbahn umfasst. Dabei wird zunächst ein rieselfähiges Mischgut für die mineralische Dichtung vor Ort hergestellt und unmittelbar danach zur abzudichtenden Deponie transportiert. Dadurch ergeben sich in der Qualität des Mischgutes kaum Abweichungen, die durch unterschiedlich lange Transportwege verursacht sind. Anschließend wird das rieselfähige Mischgut in Bahnen definierter Breite eingebaut, wobei die Bahnen vorzugsweise parallel angeordnet werden und wobei vor Einbau des Mischgutes in eine Bahn an beiden seitlichen Rändern der Bahn parallele Lehren temporär angeordnet werden. Danach erfolgt ein bahnenweises Abziehen des Mischgutes auf eine definierte Dicke mittels einer Abziehvorrichtung, die auf den Lehren geführt wird; anschließend erfolgt eine bahnenweise Verdichtung des abgezogenen Mischgutes mittels einer Verdichtungseinrichtung. Durch das bahnenweise Abziehen und das bahnenweise Verdichten kann bei definierter Breite der Bahnen und bei vorgegebener Einbaudicke, die durch die Höhe der Lehren festgelegt wird sowie durch das bekannte Gewicht der Verdichtungseinrichtung und die Festlegung der Anzahl der Verdichtungszyklen der Verdichtungsgrad nicht nur vorab genau festgelegt werden sondern für die gesamte Bahn und damit für die gesamte Deponie genau vorbestimmt und vorzugsweise konstant eingestellt werden. Dadurch wird eine hohe Prozessgenauigkeit ermöglicht. Vor dem Verdichten werden die temporären Lehren entfernt und die dadurch entstehenden Fehlstellen werden manuell mit Mischgut aufgefüllt; und zwar bis zur Höhe des bereits abgezogenen Mischgutes. Unmittelbar nach der Verdichtung erfolgt eine feldweise Anordnung einer Schutzlage auf der zuletzt verdichteten Bahn, wobei vorzugsweise die Schutzlage unmittelbar auf der zuletzt verdichteten Bahn angeordnet wird. Dadurch gelingt es, diese Bahn effektiv zu schützen, insbesondere vor Austrocknung infolge Wind oder Sonne. Damit wird eine zeitliche Beibehaltung der Materialbeschaffenheit des verdichteten Mischgutes, insbesondere des Wassergehaltes, ermöglicht. Damit ist es nicht erforderlich, den Wassergehalt des Mischgutes vor dessen Einbau allein deshalb zu erhöhen, um einem Austrocknen nach dem Verdichten entgegenzuwirken. Folglich kann der ursprüngliche Wassergehalt gegenüber den bekannten Einbauverfahren geringer gewählt werden, so dass das zu verarbeitende Mischgut keine steife, sondern eine rieselfähige Konsistenz aufweisen kann, so dass das Mischgut erfindungsgemäß besser und damit einfacher zu verarbeiten ist. Durch die Ausbildung von Bahnen ist es möglich, die Anzahl der Verdichtungsdurchgänge nicht nur genau vorzubestimmen sondern es ist ebenfalls sichergestellt, dass jeder Bereich der mineralischen Dichtung die gleiche Anzahl von Verdichtungsdurchgängen erfährt. Damit sind bereichsweise Schwankungen im Verdichtungsgrad und daraus resultierende Schwankungen in der Qualität der Dichtung nahezu auszuschließen. Erfindungsgemäß ist vorgesehen, dass beim Herstellen des rieselfähigen Mischguts ein Wassergehalt zwischen 7,5% und 8% eingestellt wird. Gegenüber den bekannten Verfahren, bei denen Wassergehalte etwa bis 12% eingestellt werden, ist damit ein enger Bereich einstellbar, der zu einer überraschenden Reduzierung der Qualitätsschwankungen führt. Zudem ist der erzielbare Wassergehalt gegenüber den bekannten Verfahren sehr gering, wodurch eine überraschende Verbesserung der Verarbeitbarkeit erzielt wird.

Besonders vorteilhaft ist, dass das erfindungsgemäße Verfahren eine exakte und exakt reproduzierbare Verdichtung ermöglicht, da das Mischgut zum Verdichten nicht unmittelbar befahren wird, sondern insbesondere mittels einer als Verdichtungseinrichtung eingesetzten Walze, die mit unterschiedlichen, definierten Auflasten beschwert sein kann, verdichtet wird. Dadurch, dass eine Zugvorrichtung für die als Verdichtungseinrichtung eingesetzten Walze neben oder alternativ oberhalb der jeweils zu verdichtenden Bahn bereits abgezogenen Mischguts bewegt werden kann, ist das Mischgut verdichtbar, ohne dass Traktion, also partieller Vorschub, in das Mischgut eingebracht wird. Da das Verfahren insbesondere in Böschungsbereichen eingesetzt wird, ist die Vermeidung partieller Lasteinleitung durch Räder oder Walzen von Zuggeräten von besonderer Bedeutung für eine gleichmäßige und homogene Ausbildung des verdichteten Mischgutes.

Gemäß einer bevorzugten Ausführungsform des erfindungsgemäßen Verfahrens erfolgt ein Einbau einer Kombinationsabdichtung zur Abdichtung einer Deponie, wobei nach vollständiger Anordnung der Schutzlage auf einer Bahn diese Schutzlage entfernt wird und unmittelbar danach die Kunststoffdichtungsbahn auf dieser Bahn angeordnet wird. Dadurch gelingt es neben den vorgenannten Vorteilen, bei der Herstellung von Kombinationsabdichtungen eine hohe Prozessgenauigkeit und damit eine hohe Prozesssicherheit zu erzielen.

Gemäß einer weiteren bevorzugten Ausführungsform werden die Bahnen parallel angeordnet. Dadurch ist die Herstellung der Deponieabdichtung besonders einfach vorab festzulegen. Insbesondere kann durch die Festlegung von Bahnen mit unterschiedlichen Breiten für Oberflächenbereiche der abzudichtenden Deponie mit unterschiedlichen Krümmungen die Ausführung der Abdichtung besonders wirtschaftlich geplant werden.

Eine weitere bevorzugte Ausführungsform der Erfindung sieht vor, dass eine Verdichtungseinrichtung verwendet wird, deren Breite jeweils gleich der Breite der zu verdichtenden Bahn ist. Vorzugsweise werden Walzen verwendet. Für unterschiedliche Bahnbreiten werden vorzugsweise jeweils Verdichtungseinrichtungen mit korrespondierenden Breiten verwendet. Dadurch kann bei gleicher Dicke des abgezogenen Mischgutes bei gleicher Anzahl von Verdichtungsdurchgängen der gleiche Verdichtungsgrad für alle Bahnen erreicht werden. Entscheidend ist dabei, dass bei der Verwendung von Walzen als Verdichtungselement die Walzen das gleiche Gewicht pro Walzenlänge aufweisen.

Eine besonders bevorzugte Ausführungsform der Erfindung sieht vor, dass der Einbau des Mischgutes und/oder das Abziehen des Mischgutes und/oder das Verdichten des Mischgutes für jede Bahn feldweise erfolgen, wobei jeweils Bahnen aus mehreren Feldern gebildet werden. Vorzugsweise erfolgt dabei die Anordnung der Schutzlage auf dem zuletzt verdichteten Feld unmittelbar nach dessen Verdichtung. Dadurch wird die Zeitspanne, in der verdichtetes Mischgut einer Austrocknung ausgesetzt ist, weiter reduziert. Damit ist eine Einstellung des Wassergehaltes des zu verarbeitenden Mischgutes in besonders engen Grenzen und in besonders geringer Höhe möglich. Damit sind die Schwankungen in der Qualität der verdichteten Bahnen besonders gering. Die Einstellung eines angestrebten Verdichtungsgrades ist damit besonders genau und damit besonders wirtschaftlich möglich.

Besonders bevorzugt wird der Wassergehalt beim Herstellen des rieselfähigen Mischguts automatisch eingestellt, wobei vor Ort gemessene Werte zu Lufttemperatur und/oder Luftfeuchtigkeit und/oder Sonnenintensität und/oder Windgeschwindigkeit verarbeitet werden. Da die Herstellung des Mischgutes vor Ort, also in unmittelbarer Nähe der abzudichtenden Deponier erfolgt, wird nicht nur eine Verkürzung der Tarnsportzeit und damit der Austrocknungszeit erreicht, sondern die Faktoren, die die tatsächliche Austrocknung vor Ort bestimmen, können unmittelbar berücksichtigt werden.

Eine weitere besonders bevorzugte Ausführungsform der Erfindung sieht vor, dass als Abziehvorrichtung ein Doppel-T-Träger verwendet wird. Bevorzugt weist der Doppel-T-Träger ein so hohes Eigengewicht auf, dass mit diesem das Mischgut einfach abgezogen werden kann, wobei der Doppel-T-Träger von einem üblichen Baufahrzeug, insbesondere von einem ohnehin regelmäßig verwendeten Einbaubagger geführt werden kann.

Eine andere bevorzugte Ausführungsform der Erfindung sieht vor, dass bei oder nach jedem Durchgang der Verdichtung mittels eines Verdichtungskontrollgerätes die Stärke der Belagsdicke oder der Verdichtungswert ermittelt werden. Dadurch kann eine kontinuierliche Ermittlung des tatsächlichen Verdichtungsgrades erfolgen, so dass ein Vergleich mit vorab errechneten Werten vorgenommen werden kann. Damit können gegebenenfalls erforderliche Korrekturen im Bauablaufplan vorgenommen werden; insbesondere eine Änderung der Anzahl der Verdichtungsdurchgänge oder eine Änderung bei der Herstellung des Mischgutes.

Besonders bevorzugt wird als Mischgut ein Gemenge aus Sand, Betonit und Polymer hergestellt. Vorteilhaft ist dabei insbesondere die gute Verarbeitbarkeit, insbesondere die gute Verdichtbarkeit.

Die Erfindung wird im Folgenden anhand eines Ausführungsbeispieles näher erläutert.

Dazu zeigen
- Figur 1: eine schematische Darstellung einer abzudichtenden Deponie in Draufsicht,
- Figur 2: ein dazugehöriges Querprofil,
- Figur 3: ein zu Figur 1 gehörendes Längsprofil,
- Figur 4: eine schematische Darstellung des erfindungsgemäßen Verfahrensablaufes,
- Figur 5: eine erfindungsgemäß verwendete Ausführungsform einer Schutzlage,
- Figur 6: eine erfindungsgemäß verwendete Verdichtungseinrichtung,
- Figur 7 und: eine erfindungsgemäß verwendete Abziehvorrichtung,
- Figur 8: eine schematische Darstellung einer nach dem Stand der Technik verdichteten mineralischen Dichtung.

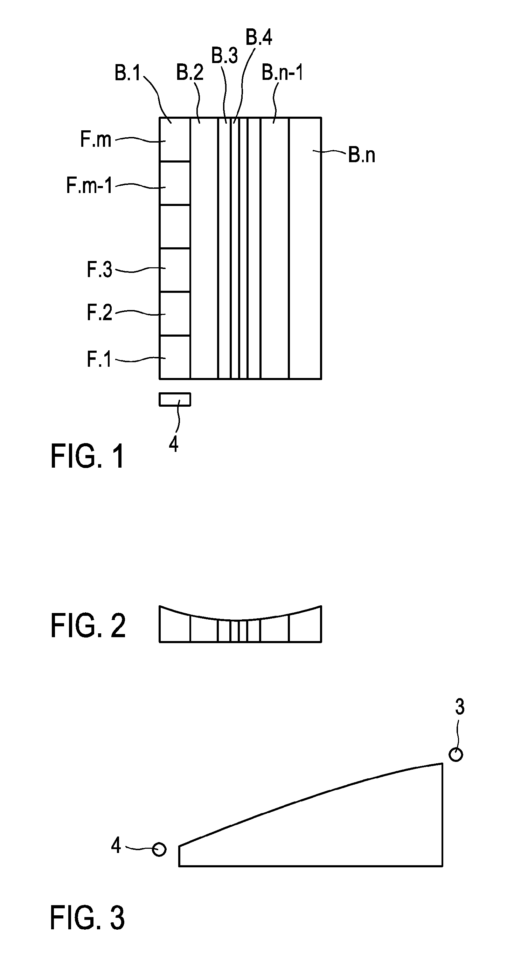

Bei der in **Figur 1** gezeigten schematischen Draufsicht auf eine Deponie sind acht Bahnen dargestellt, wobei die Bahnen unterschiedliche Breiten, nämlich 4 m, 2 m und 1 m aufweisen. Jede Bahn wird von verschiedenen Feldern F.1 bis F.m gebildet.

Bei den **Figur 2** dargestellten zugehörigen Querprofil wird deutlich, dass breite Bahnen dort angeordnet sind, wo Krümmungen in der Oberfläche der abzudichtenden Deponie einen sehr großen Radius aufweisen, während schmale Bahnen dort angeordnet werden, so die Oberfläche der abzudichtenden Deponie Krümmungen mit einem geringeren Radius aufweist.

**Figur 3** zeigt ein zu Figur 1 gehörendes Höhenprofil, in dem erkennbar ist, dass der rechts dargestellte Bereich der Deponie höher liegt als der links dargestellte Fußbereich der Deponie.

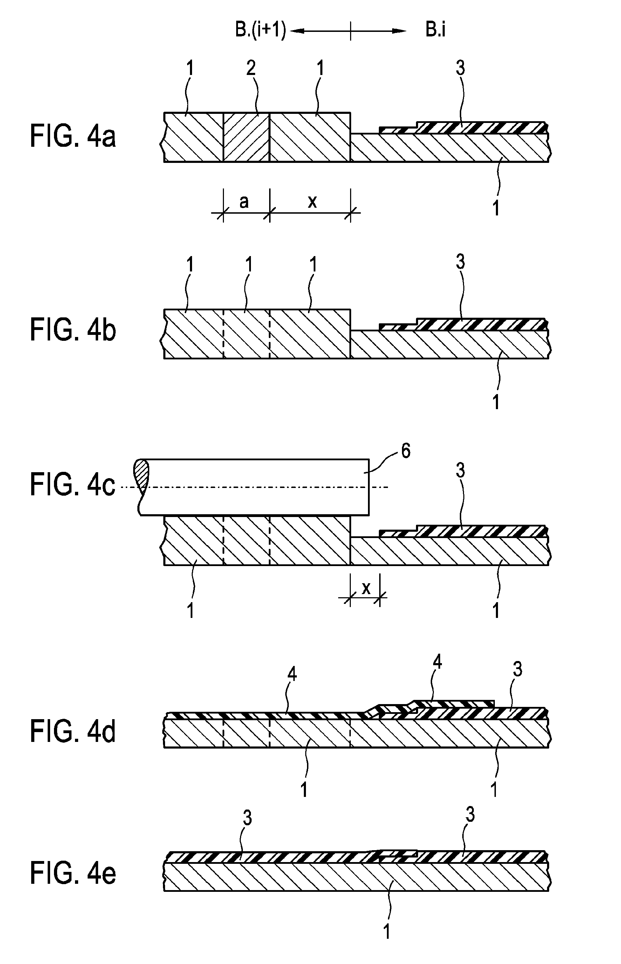

Die **Figuren 4 a bis 4 e** zeigen den abschnittsweisen Einbau einer mineralischen Dichtung. Der Einbau eines Mischgutes 1 erfolgt bahnenweise; bei den rechts dargestellten Bereichen handelt es sich um eine fertig gestellte Bahn einer mineralischen Dichtung, bestehend aus einem Mischgut 1. Bei der Herstellung einer Bahn werden zunächst Lehren 2 parallel zu den seitlichen Rändern der jeweiligen Bahn verlegt, wobei die Breite einer Lehre 2 mit a bezeichnet ist und der seitliche Abstand einer Lehre 2 vom Rand einer Bahn mit x bezeichnet ist. Die genannte Verlegung der Lehren 2 ist in den Figuren 4 nicht gesondert dargestellt. Anschließend wird mit Hilfe eines Baggers das Mischgut 1 in die Bahn eingetragen. Der Eintrag des Mischgutes 1 erfolgt dabei in einer Höhe, die geringfügig größer ist als die Höhe der Lehren 2. Auch der vorgenannte Verfahrensschritt ist in den Figuren 4 nicht gesondert dargestellt. Der Einbau des Mischgutes 1 erfolgt feldweise für jeweils eine Bahn. Der dazu erforderliche Bagger steht jeweils in den Feldern, in die noch kein Mischgut eingetragen ist. Sobald das letzte Feld F.m einer Bahn mit Mischgut 1 bestückt wird, steht der Bagger in derjenigen benachbarten Bahn, in die noch kein Mischgut 1 eingebaut ist. Sobald ein Feld F.i mit Mischgut 1 gefüllt ist, wird das Mischgut mittels einer Abziehvorrichtung 5, welche auf den Lehren 2 gezogen wird, abgezogen. Als Abziehvorrichtung fungiert ein Doppel-T-Profil, das am Bagger angehängt ist. Das Eigengewicht dieses Doppel-T-Profiles ist dabei so groß, dass das Mischgut 1, das rieselfähig ausgebildet ist, auf einfache Weise abgezogen wird. Dadurch bildet wird eine konstante Dicke des Mischgutes 1 ausgebildet. Der genannte Zustand ist in **Figur 4 a** dargestellt.

Anschließend werden die Lehren 2, die vorzugsweise durch quadratische Kanthölzer mit einer Kantenlänge von 14 cm gebildet werden, manuell entfernt. Die dadurch entstehenden Fehlstellen werden anschließend manuell mit Mischgut 1 ausgefüllt. Dieser Zustand ist in **Figur 4 b** dargestellt. Alternativ ist es auch möglich, Kanthölzer mit anderen Kantenlängen zu verwenden.

**Figur 4 c** zeigt die im Anschluss daran vorgenommene Verdichtung. Dabei wird eine Verdichtungseinrichtung 6, hier dargestellt durch eine zylindrische Walze, vorgenommen. Die links dargestellte Bahn hat die gleiche Breite wie die rechts dargestellte Bahn. Für die Verdichtung der links dargestellten Bahn wird die gleiche Walze verwendet, die auch für die Verdichtung der rechts dargestellten Bahn eingesetzt wurde. Die Anzahl der Verdichtungszyklen für die links dargestellte Bahn ist gleich der Anzahl der Verdichtungszyklen der rechts dargestellten Bahn, so dass sich nach Abschluss der Verdichtung der links dargestellten Bahn die gleiche Dicke des verdichteten Mischgutes 1 einstellt wie bei der rechts dargestellten Bahn. Unmittelbar nach Abschluss der Verdichtung des betreffenden Feldes F.i der links dargestellten Bahn wird eine Schutzlage 4 aufgelegt. Die Schutzlage 4 besteht aus einer PEHD-Folie mit etwa 1,5 mm Dicke; das Aufziehen der Schutzlage 4, die zunächst auf einer Trommel am Deponiefuß aufgerollt ist, erfolgt durch den Bagger, mit dem das Mischgut 1 eingetragen wurde.

Entscheidend ist bei dem Verdichtungsdurchgang, dass die verwendete Verdichtungseinrichtung 6 eine nur geringfügig größere Breite als die zu verdichtende Bahn B.i aufweist. Für verschiedene Bahnbreiten werden verschiedene Verdichtungsgeräte 6 verwendet, wobei die Breite der Verdichtungsgeräte jeweils korrespondiert mit der Breite der zu verdichtenden Bahn. Dabei weisen alle Verdichtungseinrichtungen 6 das gleiche Gewicht pro Walzenlänge auf.

Das Auflegen der Schutzlage 4, dargestellt in **Figur 4d**, dient dazu, das zuletzt verdichtete Mischgut 1 unmittelbar nach dessen Verdichtung vor Austrocknung, insbesondere infolge von Wind- und Sonneneinstrahlung, zu schützen.

**Figur 4 e** zeigt den Zustand einer Bahn, nachdem sämtliche Felder der betreffenden Bahn eingebaut und verdichtet wurden. Dabei wurden nicht nur die Schutzlagen 4 der zuerst eingebauten und verdichteten Felder F.i entfernt, sondern eine Kunststoffdichtungsbahn 3 aufgelegt, die mit der Kunststoffdichtungsbahn 3 der benachbarten bereits fertig gestellten Bahn überlappend angeordnet wurde.

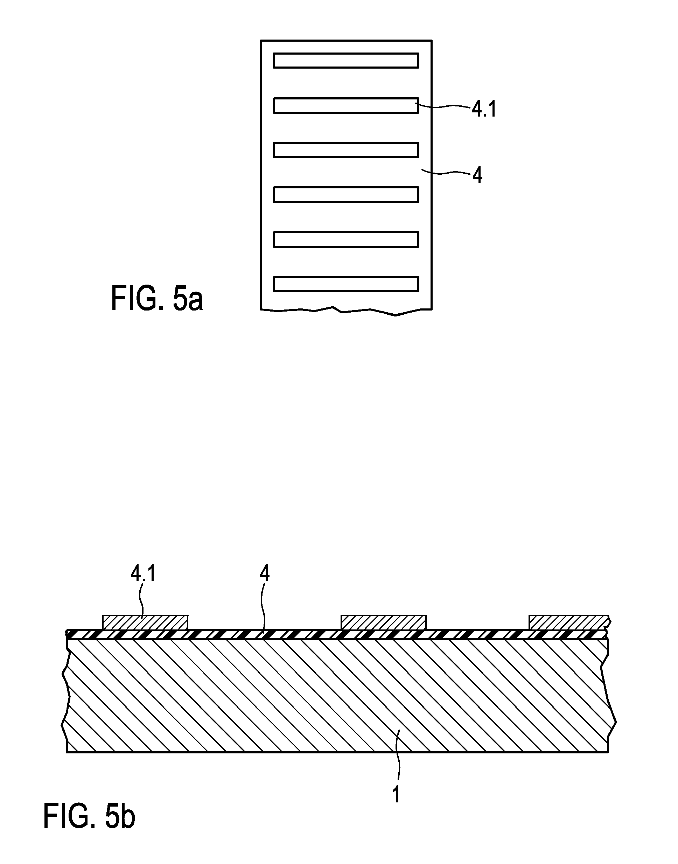

**Figur 5 a** und **Figur 5b** zeigen eine Schutzlage, die aus einer PEHD-Folie gebildet wurde, auf der Beschwerungselemente 4.1 angeordnet sind, die als quer mit der Folie verklebte Bleche ausgebildet sind. Durch die beschriebene Ausbildung der Schutzlage 4 ist einerseits sichergestellt, dass das Gewicht der Schutzlage 4 ausreicht, um diese auch bei Sturm sicher auf dem verdichteten Mischgut 1 aufliegen zu lassen und andererseits ein Aufrollen der Schutzlage 4 auf eine Trommel zu ermöglichen, die üblicherweise am Fuß der jeweiligen Bahn B.i angeordnet wird.

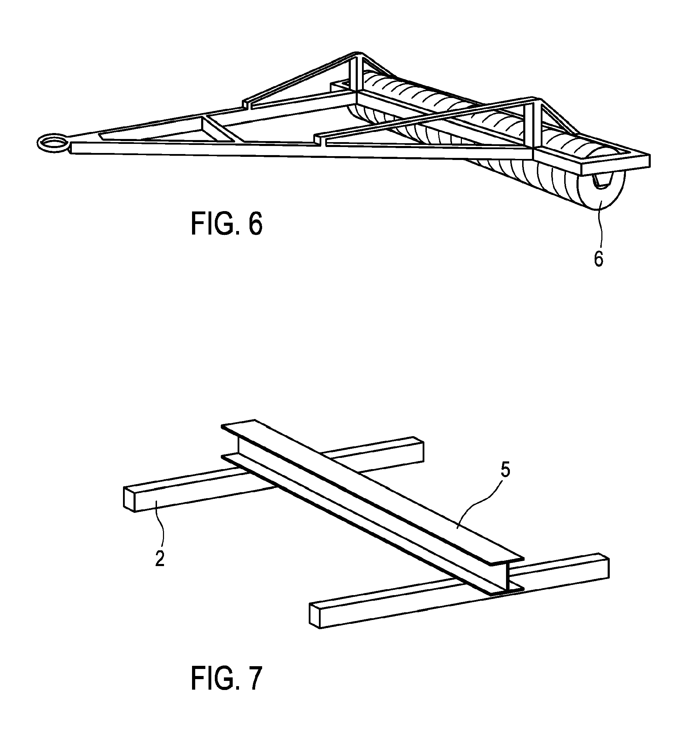

**Figur 6** zeigt eine Ausführungsform einer erfindungsgemäß verwendeten Verdichtungseinrichtung 6, die eine Stahlwalze umfasst. Diese Stahlwalze ist an einem Gestell drehbar angeordnet, welches zum Einbau des Mischgutes 1 ohnehin vorhandenen Bagger in einfacher Weise auf dem hier nicht dargestellten Mischgut der jeweiligen Bahn B.i geführt wird.

**Figur 7** zeigt eine Abziehvorrichtung 5, die von einem Doppel-T-Träger gebildet wird. Am Doppel-T-Träger ist ein hier nicht dargestelltes Gestell befestigt, mit Hilfe dessen mittels des Baggers die Abziehvorrichtung über die Lehren 2 gezogen wird, wobei das hier nicht dargestellte Mischgut 1 auf die von den Lehren 2 vorgegebene Höhe verteilt wird.

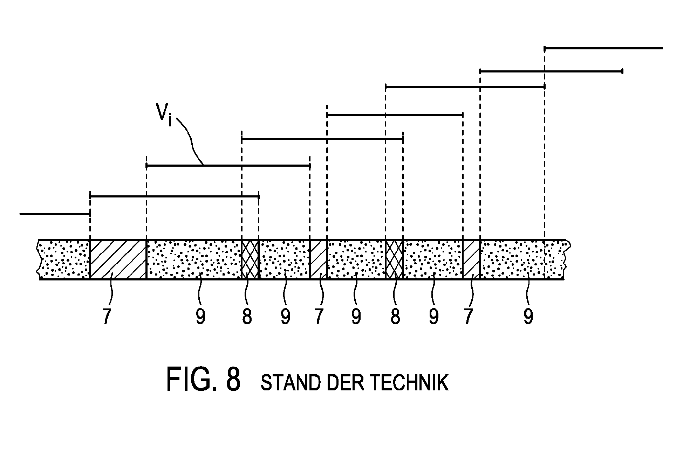

**Figur 8** zeigt eine nach dem Stand der Technik eingebaute mineralische Dichtung, die mit mehreren Walzdurchgängen verdichtet wurde. Die Verdichtung erfolgte hier auch lagenweise, jedoch nicht mit vorgegebenen definierten Breiten von Bahnen. Die Bahnen, in denen die Verdichtung der mineralischen Dichtung erfolgte, sind mit Vi bezeichnet. Es ist erkennbar, dass die eingebaute mineralische Dichtung erste Bereiche 7 aufweist, die nur einen Verdichtungszyklus erfahren haben, während zweite Bereiche 8 jeweils drei Verdichtungszyklen erfahren haben und wobei dritte Bereiche 9 zwei Verdichtungszyklen erfahren haben. Die schematische Darstellung zeigt deutlich, dass trotz scheinbar gleicher Bahnbreite und scheinbar gleichem Bahnabstand bei der Verdichtung Teilbereiche der mineralischen Dichtung unterschiedlich oft verdichtet wurden, so dass die mineralische Dichtung nach dem Stand der Technik, anders als die nach dem erfindungsgemäßen Verfahren hergestellten mineralischen Dichtungen, eine sehr inhomogene Qualität aufweist.

### BEZUGSZEICHENLISTE

- B.1 bis B.n: Bahnen
- F.1 bis F.m: Felder

- 1: Mischgut
- 2: Lehre
- 3: Kunststoffdichtungsbahn (KDB)
- 4: Schutzlage
4.1 Beschwerungselemente
- 5: Abziehvorrichtung
- 6: Verdichtungseinrichtung
- 7: erste Bereiche
- 8: zweite Bereiche
- 9: dritte Bereiche

## Patentansprüche

1. Verfahren zum Anordnen einer mineralischen Dichtung auf einer Deponie, insbesondere zum Einbau einer Kombinationsabdichtung, die neben der mineralischen Dichtung eine Kunststoffdichtungsbahn umfasst, umfassend die Verfahrensschritte
- Herstellen eines rieselfähigen Mischguts (1) für die mineralische Dichtung vor Ort,
- Transport des Mischguts (1) für die mineralische Dichtung zur abzudichtenden Deponie,
- Einbau des rieselfähigen Mischguts (1) in Bahnen (B.1 bis B.n) definierter Breite, wobei vor Einbau des Mischgutes (1) in eine Bahn (B.1 bis B.n) an beiden seitlichen Rändern der Bahn (B.1 bis B.n) parallele Lehren (2) temporär angeordnet werden,
- bahnenweises Abziehen des Mischgutes (1) auf eine definierte Dicke mittels einer Abziehvorrichtung (5), die auf den Lehren (2) geführt wird,
- bahnenweise Verdichtung des abgezogenen Mischgutes (1) mittels einer Verdichtungseinrichtung (6),
- feldweise Anordnung einer Schutzlage (4) auf der zuletzt verdichteten Bahn (B.1 bis B.n) unmittelbar nach der Verdichtung,
wobei beim Herstellen des rieselfähigen Mischguts (1) ein Wassergehalt zwischen 7,5% und 8% eingestellt wird.

2. Verfahren zum Einbau einer Kombinationsabdichtung zur Abdichtung einer Deponie, umfassend die Verfahrensschritte nach Anspruch 1, wobei
- nach vollständiger Anordnung der Schutzlage (4) auf einer Bahn (B.1 bis B.n) diese Schutzlage (4) entfernt wird und unmittelbar danach die Kunststoffdichtungsbahn (3) auf dieser Bahn (B.1 bis B.n) angeordnet wird

3. Verfahren nach Anspruch 1 oder 2, **dadurch gekennzeichnet, dass** die Bahnen (B.1 bis B.n) parallel angeordnet werden.

4. Verfahren nach einem der vorhergehenden Ansprüche, **dadurch gekennzeichnet, dass** wenigstens eine Verdichtungseinrichtung (6) verwendet wird, deren Breite jeweils gleich der Breite der zu verdichtenden Bahn (B.1 bis B.n) ist

5. Verfahren nach einem der vorhergehenden Ansprüche, **dadurch gekennzeichnet, dass** der Einbau des Mischgutes (1) und/oder das Abziehen des Mischgutes (1) und/oder das Verdichten des Mischgutes (1) für jede Bahn (B.1 bis B.n) feldweise erfolgt, wobei jeweils Bahnen (B.1 bis B.n) aus mehreren Feldern (F.1 bis F.m) gebildet werden.

6. Verfahren nach Anspruch 5, **dadurch gekennzeichnet, dass** dass die Anordnung der Schutzlage (4) auf dem zuletzt verdichteten Feld (F.1 bis F.m) unmittelbar nach dessen Verdichtung erfolgt,

7. Verfahren nach einem der vorhergehenden Ansprüche, **dadurch gekennzeichnet, dass** beim Herstellen des rieselfähigen Mischguts (1) ein Wassergehalt automatisch eingestellt wird, wobei vor Ort gemessene Werte zu Lufttemperatur und/oder Luftfeuchtigkeit und/oder Sonnenintensität und/oder Windgeschwindigkeit verarbeitet werden.

8. Verfahren nach einem der vorhergehenden Ansprüche, **dadurch gekennzeichnet, dass** als Abziehvorrichtung (5) ein Doppel-T-Träger verwendet wird.

9. Verfahren nach einem der vorhergehenden Ansprüche, **dadurch gekennzeichnet, dass** bei oder nach jedem Durchgang der Verdichtung mittels eines Verdichtungskontrollgerätes die Stärke der Belagsdicke oder der Verdichtungswert ermittelt werden.

10. Verfahren nach einem der vorhergehenden Ansprüche, **dadurch gekennzeichnet, dass** als Mischgut ein Gemenge aus Sand, Betonit und Polymer hergestellt wird.

11. Verfahren nach einem der vorhergehenden Ansprüche, **dadurch gekennzeichnet, dass** als Schutzlage (4) eine Folie verwendet wird, an der Beschwerungselemente (4.1) befestigt sind.
